# EUROPEAN PATENT APPLICATION

(11) **EP 2 096 277 A1**
(43) Date of publication of application: **02.09.2009**
(21) Application number: 08425118.0
(22) Date of filing: 27.02.2008
(51) Int. Cl.: F02B 37/10, F02B 39/10, F02B 37/12, F02C 6/00

(54) **Supercharged internal-combustion engine**

(71) Applicant: MAGNETI MARELLI POWERTRAIN S.p.A., 20011 Corbetta (MI) (IT)
(72) Inventor: Gaviani, Giovanni Maria, 47900 Rimini (IT); Ciampolini, Franco, 40134 Bologna (IT); Dalla, Roberto, 40100 Bologna (IT)
(74) Representative: Bergadano, Mirko

(57) **Abstract**

A supercharged internal-combustion engine (1) displaying: a turbine (13), which is arranged along an exhaust pipe (10) to rotate under the influence of the exhaust gases ejected from the cylinders (3); a compressor (14), which is mechanically independent from the turbine (13) and is arranged along an intake pipe (6) to increase the pressure of the air fed from the feeding pipe (6) itself; an electric generator (21), which is rotated by the turbine (13) to generate electric current; an electric motor (24), which rotates the compressor (14); and an accumulation system (23) electrically connected to the electric generator (21) and to the electric motor (24).

## Description

### TECHNICAL FIELD

The present invention relates to a supercharged internal-combustion engine.

### BACKGROUND ART

As it is known, some internal-combustion engines are provided with a turbocharger supercharging system, which is capable of increasing the power developed by the engine by exploiting the enthalpy of the exhaust gases for compressing the air taken in by the engine and thus increasing the volumetric intake efficiency.

A turbocharger supercharging system comprises a turbocharger provided with a turbine, which is arranged along an exhaust pipe to rotate at a high speed under the influence of the exhaust gases ejected by the engine, and with a compressor, which is rotated by the turbine and is arranged along the air feeding pipe to compress the air taken in by the engine.

In a turbocharger supercharging system, the operating field of the turbocharger must be kept within an useful area depending on the driving point for both functional reasons (i.e. to avoid irregular or low efficiency operations) and structural reasons (i.e. to avoid damages to the turbocharger). Specifically, on the left side of the Reduced Mass Flow Rate/Compression Ratio map there is a "forbidden" area delimited by the surge line, consisting of the set of points in which the aerodynamic balance inside the compressor is broken and a periodical, noisy and violent rejection of flow to the mouth occurs, with effects which may be destructive for the blading; instead, on the right side of the Reduced Mass Flow Rate/Compression Ratio map there is a second "forbidden" area delimited by the so-called "stalling line", which corresponds to reach sonic conditions (and consequent flow rate blockage) at the turbine inlet and defines the maximum possible flow rate that the compressor may supply in the given intake environment conditions. Consequently, the operation of the turbocharger supercharging systems is always a compromise between the compressor needs and the turbine needs, and thus neither of the two pneumatic machines may operate in optimal conditions. Furthermore, the two pneumatic machines must be designed to work together (i.e. always at the same rotation speed); consequently, the two pneumatic machines cannot be optimized for maximizing the corresponding efficiencies.

One of the major drawbacks of a traditional turbocharger supercharging system is the so-called turbo lag; when an increase of delivered power is requested, the action of the compressor occurs only after a certain time interval because it is necessary to wait for the increase of volume and speed of the exhaust gases to accelerate the turbine and thus the compressor. In order to reduce the so-called turbo lag, it has been suggested to use small turbochargers having a low mechanical inertia, or it has been suggested to couple a volumetric compressor with the turbocharger. Furthermore, in order to attempt to reduce the so-called turbo lag, it has been suggested to key, onto the turbocharger shaft (i.e. between the compressor and the turbine), an electric machine which is operated as an electric motor to accelerate the compressor as soon as an increase of the delivered power is requested and, therefore, without waiting for the effect of increasing the volume and the speed of the exhaust gases; however, this solution displays various drawbacks related to the positioning of the electric machine which, being arranged close to the exhaust pipe, is subject to very high heating.

US2006218923A1 describes an internal-combustion engine 12 supercharged by means of a turbocharger 24 provided with a turbine and with a compressor keyed onto a common shaft onto which an electric machine 46 is also keyed, electric machine which can be used either as motor to increase the rotation speed of the compressor (and thus to cancel the so-called turbo lag) or as generator to exploit the enthalpy of the exhaust gases for generating electric energy.

US2006218923A1 describes an internal-combustion engine 10 supercharged by means of a turbocharger provided with a turbine 22 and with a compressor 24 keyed onto a common shaft onto which an electric machine 32 is also keyed, electric machine which can be used either as motor to increase the rotation speed of the compressor (and thus to cancel the so-called turbo lag) or as generator to exploit the enthalpy of the exhaust gases for generating electric energy which is used to supply an electric motor 34 keyed onto the drive shaft of the internal-combustion engine 10.

US2004194466A1 describes a supercharged internal-combustion engine, in which a first compressor 1a is actuated by a turbine rotated by the exhaust gases and a second compressor 2a arranged downstream of the first compressor is actuated by an electric motor 2b.

JP58222965A2 describes a supercharged internal-combustion engine, in which a compressor 27 compresses the air taken in and is actuated only by an electric motor 29.

US2007180824A1 describes a supercharged internal-combustion engine, in which a compressor 230 compresses the air taken in and is actuated only by an electric motor 231.

JP2004150348 describes an aspirated (i.e. not supercharged) internal-combustion engine, in which a turbine 13 is rotated by the exhaust gases and is connected to an electric generator 14.

### DISCLOSURE OF INVENTION

It is the object of the present invention to provide a supercharged internal-combustion engine, which is easy and cost-effective to make and free from the aforesaid drawbacks.

According to the present invention, a supercharged internal-combustion engine is provided as claimed in the appended claims.

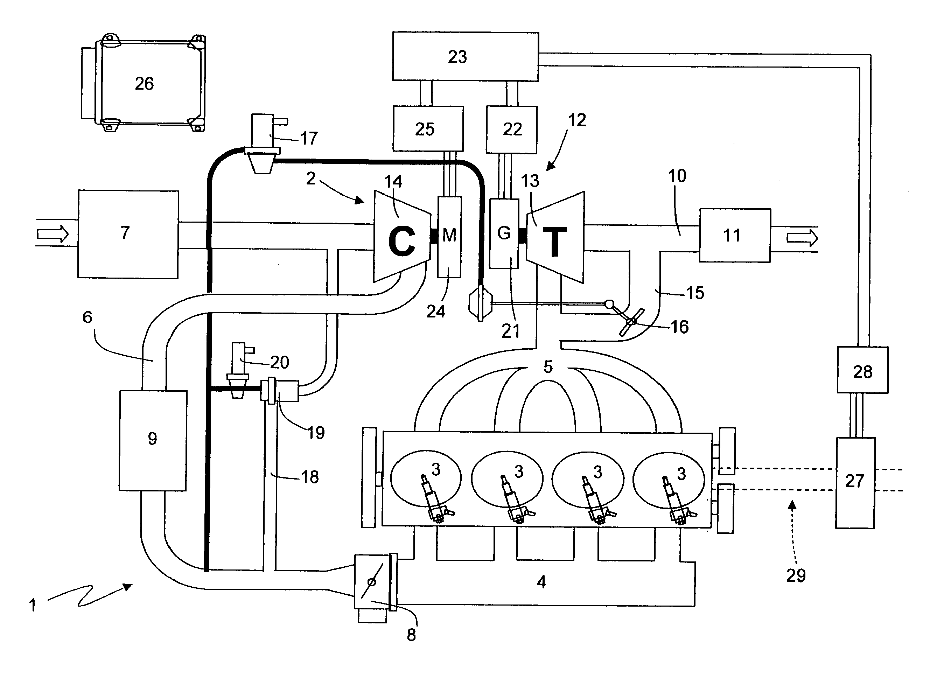

### BRIEF DESCRIPTION OF THE DRAWING

The present invention will now be described with reference to the accompanying drawing, which illustrates a non-limitative embodiment thereof; specifically, the accompanying figure diagrammatically shows a supercharged internal-combustion engine made according to the present invention.

### PREFERRED EMBODIMENTS OF THE INVENTION

In the accompanying figure, numeral 1 indicates as a whole an internal-combustion engine supercharged by means of a turbocharger supercharging system 2.

The internal-combustion engine 1 comprises four cylinders 3, each of which is connected to an intake manifold 4 by means of at least one corresponding intake valve (not shown) and to an exhaust manifold 5 by means of at least one corresponding exhaust valve (not shown). The intake manifold 4 receives fresh air (i.e. air coming from the external environment) through an intake pipe 6, which is provided with an air filter 7 and is adjusted by a butterfly valve 8. An intercooler 9 for cooling the taken-in air is arranged along the intake pipe 6. An exhaust pipe 10 which feeds the exhaust gases produced by the combustion to an exhaust system is connected to the exhaust manifold 5, which exhaust system releases the gases produced by the combustion into the atmosphere and normally comprises at least one catalyst 11 and at least one muffler (not shown) arranged downstream of the catalyst 11.

The supercharging system 2 of the internal-combustion engine 1 comprises a turbocharger 12 provided with a turbine 13, which is arranged along the exhaust pipe 10 in order to rotate at high speed under the influence of the exhaust gases ejected from the cylinders 3, and a compressor 14, which is arranged along the intake pipe 6 to increase the pressure of the fed air from the feeding pipe 6 and is mechanically independent from the turbine 13 (i.e. does not display any mechanical connection to the turbine 13).

Along the exhaust pipe 10, a bypass pipe 15 is provided, which is connected in parallel to the turbine 13 so as to display the ends thereof connected upstream and downstream of the turbine 13 itself; along the bypass pipe 15, a wastegate valve 16 is arranged, which is adapted to adjust the flow rate of the exhaust gases which flow through the bypass pipe 15 and is driven by an actuator 17. Along the exhaust pipe 6, a bypass pipe 18 is provided, which is connected in parallel to the compressor 14 so as to display the ends thereof connected upstream and downstream of the compressor 14 itself; along the bypass pipe 18, a P_{off} valve 19 is arranged, which is adapted to adjust the flow rate of the exhaust gases which flow through the bypass pipe 18 and is driven by an actuator 20.

The turbine 13 and the compressor 14 are not mechanically connected together and therefore may be arranged in different areas of the internal-combustion engine 1. The turbine 13 is keyed to an electric generator 21, which is rotated by the turbine 13 itself to generate electric current; the electric generator 21 is electrically connected to an electronic driving device 22, which in turn is connected to an accumulation system 23 consisting of a battery or a battery pack. The compressor 14 is keyed to an electric motor 24, which rotates the compressor 14 itself; the electric motor 24 is electrically connected to an electronic driving device 25, which is in turn connected to the accumulation system 23.

The internal-combustion engine 1 is controlled by an electronic control unit 26, which governs the operation of all the components of the internal-combustion engine 1, comprising the supercharging system 2. Specifically, the electronic control unit 21 drives the actuators 17 and 20 of the wastegate valve 16 and of the P_{off} valve 19 and drives the actuating devices 22 and 25.

During the operation of the internal-combustion engine 1, the electronic control unit 26 reciprocally drives in a completely autonomous manner the electric motor 24, which rotates the compressor 14, and the electric generator 21, which is rotated by the turbine 13. In other words, the electronic control unit 26 drives the electric motor 24, which rotates the compressor 14, with the sole objective of optimizing cylinder aspiration 3 according to the required performances (i.e. torque and power to be delivered by the internal-combustion engine 1); on the other hand, the electronic control unit 26 drives the electric generator 21, which is rotated by the turbine 13, with the sole objective of optimizing the generation of electric energy, i.e. of maximizing the generated electric power without penalizing the operation of the internal-combustion engine 1.

Preferably, a reversible electric machine 27 is provided, which may be operated either as an electric motor to consume electric current and produce a mechanical torque, or as a generator to consume mechanical energy and produce electric energy. The reversible electric machine 27 is electrically connected to an electronic driving device 28 connected in turn to an accumulation system 23 and is controlled by the electronic control unit 26. Furthermore, the reversible electric machine 27 is mechanically connected either directly or indirectly to a driveline 29 of the internal-combustion engine 1 which transmits the torque generated by the internal-combustion engine 1 itself. For example, if the internal-combustion engine 1 is used for traction and is mounted in a vehicle, the reversible electric machine 27 may be mechanically connected either to a drive shaft of the internal-combustion engine 1, to a primary shaft of a gearbox, to a secondary shaft of a gearbox or directly to the drive wheels.

In use, when the internal-combustion engine 1 continuously delivers a relative high power (e.g. in the case of traction applications, when the vehicle is traveling on a freeway), the exhaust gases produced in the cylinders 3 display a high enthalpy and thus the electric generator 21 rotated by the turbine 13 is capable of generating an electric power much higher than the electric power consumed by the electric motor 24 to rotate the compressor 14; under these conditions, the fraction of electric power generated by the electric generator 21 and not consumed by the electric motor 24 is supplied to the reversible electric machine 27 which is operated as a motor to generate additional torque which is added to the torque generated by the internal-combustion engine 1. In this manner, it is possible to maximize the overall system efficiency by fully exploiting the enthalpy of the exhaust gases produced in the cylinders 3.

The above-described internal-combustion engine 1 displays many advantages, because it allows to optimize the generation of electric energy by exploiting the enthalpy of the exhaust gases produced in the cylinders 3, and to optimize, in each driving point, the operation of the compressor 14 according to the air intake needs by eliminating, among other things, the lag of starting the compressor 14.

In virtue of the fact that the turbine 13 and the compressor 14 are not mechanically connected to each other, both such elements may be designed to work at optimized rotation rates for the corresponding tasks without needing to take into account the needs of the other element.

Furthermore, in virtue of the fact that the turbine 13 and the compressor 14 are not mechanically connected to each other, the arrangement of such elements is completely free; accordingly, it is no longer necessary to arrange a portion of the exhaust pipe 10 close to a portion of the intake pipe 6 with an evident simplification in the geometry of such pipes 6 and 10. It is worth noting that when the compressor 14 (and thus the intake pipe 6) is arranged far from the turbine 13 (and thus from the exhaust pipe 10), heat transfer from the exhaust pipe 10 to the intake pipe 6 is avoided, and thus an undesired heating of the intaking air which reduces the volumetric efficiency of the intake itself is avoided; therefore the intercooler 9 may also display smaller dimensions with respect to an intercooler of a similar internal-combustion engine provided with a traditional turbocharger.

## Claims

1. A supercharged internal-combustion engine (1) comprising:
a turbine (13), which is arranged along an exhaust pipe (10) to rotate under the influence of the exhaust gases ejected from the cylinders (3); and
a compressor (14), which is arranged along an intake pipe (6) to increase the pressure of the air fed from the intake pipe (6) itself;
the internal-combustion engine (1) is **characterized in that:**
the turbine (13) and the compressor (14) are reciprocally mechanically independent not displaying any reciprocal mechanical connection;
an electric generator (21) is comprised, which is rotated by the turbine (13) to generate electric current; and
a first electric motor (24) is comprised, which rotates the compressor (14).

2. An internal-combustion engine (1) according to claim 1 and comprising an accumulation system (23) electrically connected to the electric generator (21) and to the first electric motor (24).

3. An internal-combustion engine (1) according to claim 1 or 2 and comprising an electronic control unit (26) which drives the first electric motor (24), which rotates the compressor (14), with the sole objective of optimizing the intake of the cylinders (3) according to the required performances and drives the electric generator (21), which is rotated by the turbine (13), with the sole objective of optimizing the generation of electric energy.

4. An internal-combustion engine (1) according to claim 1, 2 or 3 and comprising a second electric motor which is either directly or indirectly mechanically connected to a driveline (29) of the internal-combustion engine (1) which transmits the torque generated by the internal-combustion engine (1) itself.

5. An internal-combustion engine (1) according to claim 4 and comprising an electronic control unit (26) which drives the second electric motor for generating an additional torque by consuming the fraction of electric power generated by the electric generator (21) and not consumed by the first electric motor (24).

6. An internal-combustion engine (1) according to claim 4 or 5, wherein the second electric motor consists of a reversible electric machine (27), which may be operated either as electric motor for consuming electric energy and producing a mechanical torque, or as a generator for consuming mechanical energy and producing electric energy.
